# EUROPEAN PATENT APPLICATION

(11) **EP 4 570 569 A1**
(43) Date of publication of application: **18.06.2025**
(21) Application number: 24216704.7
(22) Date of filing: 30.11.2024
(51) Int. Cl.: B60L 3/12, B60L 50/20, B60L 53/12, B60L 53/14, B60L 53/30, B60L 53/31, B60L 53/51, B60L 53/53, B60L 53/57, B60L 53/62, B60L 53/65, B60L 53/66, B60L 53/68, B60L 58/12, G01R 31/382, H01M 10/48, H02J 7/00, H02J 7/35, H02J 13/00, H02J 50/10

(54) **A GRID-INDEPENDENT MOBILE DEVICE CHARGING SYSTEM AND A METHOD FOR MANAGING THE CHARGING OF MOBILE DEVICES**

(30) Priority: 30.11.2023 EP 23461684
(71) Applicant: Seedia Sp. z o.o., 31-231 Kraków (PL)
(72) Inventor: HOLUBOWICZ, Piotr, 43-300 Bielsko-Biala (PL)
(74) Representative: Kancelaria Eupatent.pl Sp. z.o.o

(57) **Abstract**

A grid-independent mobile device charging system, comprising: a cloud module (110) designed to analyze system data and determine the operational parameters of individual system modules based on this analysis; a distribution module (120) wirelessly connected to the cloud module (110), designed to receive the operational parameters of individual system modules from the cloud module (110) and transmit them to subsequent modules; a converter module (130) connected to the distribution module (120), designed to receive an authorization code from the user and facilitate information transfer between modules; a battery charging module (140) connected to the converter module (130), designed to charge batteries (142), wherein the battery charging module (140) includes a means for generating energy (141) from renewable sources and batteries (142) for storing the electricity produced by said means for generating energy (141); and a personal transporter charging module (150) connected to the distribution module (120), the converter module (130), and the battery charging module (140), designed to receive and charge the mobile device, wherein the personal transporter charging module (150) comprises at least one charging output (151) designed to charge the mobile device, at least one electrolock (152A) designed to receive and secure the mobile device, and an LED display (153) for determining the status of the charging output (151). The personal transporter charging module (150) monitors the battery charge level (142), the amount of energy produced by the means for generating energy (141) from renewable sources, and the charging status of the mobile device, and determines the charging voltage at each of the charging outputs (151) based on predefined instructions stored in memory containing specific thresholds for the battery charge (142) and the current generated by the means for generating energy (141) from renewable sources and the charging currents assigned to these thresholds, wherein the instructions that determine the charging voltage can be remotely modified by changing the instructions in the cloud module (110) and sending them to the personal transporter charging module (150) via the distribution module (120).

## Description

### TECHNICAL FIELD

The present invention relates to a method and system for managing the charging process of mobile devices, specifically electric bicycles and electric scooters, in an off-grid installation operating independently of external electrical networks, utilising real-time data analysis. The invention is particularly suitable for devices designed for charging and parking small electromobility devices such as scooters, bicycles, electric cargo bicycles, monocycles, electric carts, and similar vehicles, but is not limited to these applications.

### BACKGROUND ART

The trend towards using renewable energy sources to power equipment is growing globally, in an effort to reduce the harmful carbon footprint of conventional power sources. As the shift away from fossil fuel-based energy sources continues, naturally occurring energy is receiving increased attention. However, this energy is subject to variable conditions. For instance, solar energy is only available during the day, and factors such as cloud cover, precipitation, and dust can limit the amount of energy that reaches the earth's surface, where it can be converted into electricity to power electrical loads.

Most current solutions that utilise renewable energy sources store energy in buffers and supply electricity to consumers from these buffers. Concurrently, a significant number of new mobility-enhancing devices, categorised as personal transportation equipment (UTO), have emerged on the market. These include electric scooters, electric bicycles, electric cargo bikes, electric monocycles, electric skateboards, electric wheelchairs, and others. All these devices require safe parking and charging facilities to operate in public spaces. However, most public spaces are not equipped to supply electricity from the grid, or doing so is a complex and time-consuming process.

It has been observed that energy storage alone does not guarantee stable operation of power supply systems, especially when there is a lack or significantly reduced ability to draw energy from renewable sources. This is applicable to devices related to road infrastructure, such as traffic signals, illumination of traffic signs, curves, bridges, as well as electric vehicle charging stations, small electromobility devices, and many other consumers. Therefore, solutions are needed to optimise the performance of power systems to ensure that at least the most critical devices can operate for as long as possible.

### SUMMARY OF THE INVENTION

The object of the invention is a grid-independent mobile device charging system, comprising: a cloud module designed to analyze system data and determine the operational parameters of individual system modules based on this analysis; a distribution module wirelessly connected to the cloud module, designed to receive the operational parameters of individual system modules from the cloud module and transmit them to subsequent modules; a converter module connected to the distribution module, designed to receive an authorization code from the user and facilitate information transfer between modules; a battery charging module connected to the converter module, designed to charge batteries, wherein the battery charging module includes a means for generating energy from renewable sources and batteries for storing the electricity produced by said means for generating energy; and a personal transporter charging module connected to the distribution module, the converter module, and the battery charging module, designed to receive and charge the mobile device, wherein the personal transporter charging module comprises at least one charging output designed to charge the mobile device, at least one electrolock designed to receive and secure the mobile device, and an LED display for determining the status of the charging output. The personal transporter charging module monitors the battery charge level, the amount of energy produced by the means for generating energy from renewable sources, and the charging status of the mobile device, and determines the charging voltage at each of the charging outputs based on predefined instructions stored in memory containing specific thresholds for the battery charge and the current generated by the means for generating energy from renewable sources and the charging currents assigned to these thresholds, wherein the instructions that determine the charging voltage can be remotely modified by changing the instructions in the cloud module and sending them to the personal transporter charging module via the distribution module.

Preferably, the distribution module includes a GSM antenna that enables remote connection of the distribution module with the cloud module.

Preferably, the distribution module includes a temperature sensor.

Preferably, the converter module includes a QR code reader.

Preferably, the converter module includes an RFID reader.

Preferably, the means for generating energy from renewable sources is selected from the group consisting of photovoltaic panels and wind turbines.

Preferably, the electrolock further includes a sensor that indicates whether the mobile device is placed in the electrolock.

Preferably, the instructions containing specific thresholds for charging the battery and the current generated by the means for generating energy from renewable sources, and charging currents assigned to these thresholds, allow the determination of two charging thresholds for each of the charging outputs, wherein: below the first threshold, the charging voltage is turned off, but the supply voltage allows the electrolocks to continue operation; above the first threshold, the charging voltage is adjusted to the number of connected devices and set dynamically, depending on the current state of the battery; above the second threshold, the charging voltage is set to the maximum, providing the fastest charging mode for the connected device.

Preferably, the charging voltage at the charging outputs is respectively: below 11.2 V when the measured values do not exceed the first threshold; between 11.2-12 V when the measured values exceed the first threshold; above 12 V when the measured values exceed the second threshold.

Preferably, the battery charging module is designed to dynamically measure in real time the state of charge of the battery and the current generated by the means for generating energy from renewable sources.

The object of the invention is also a method for managing the charging of mobile devices, the method comprising the steps of: measuring a state of charge of a battery and a current generated by an means for generating energy utilizing renewable sources; determining a charging current to be delivered to a selected charging output, based on the measured state of charge of the battery, the measured current generated by the means for generating energy, and predefined instructions stored in memory, said instructions comprising specific thresholds for the battery charge and the current generated by the means for generating energy, and charging currents assigned to these thresholds; delivering the determined charging current to the selected charging output; repeating the measuring of the state of means for generating energy production means; monitoring for changes in the state of charge of the battery and the current generated by the means for generating energy that exceed a predetermined threshold in the instructions; and modifying the charging current supplied to the charging output in accordance with the instructions if the threshold is exceeded.

Preferably, if the measured values do not exceed the first threshold, the charging currents are deactivated while maintaining supply voltage to operate electrolocks; if the first threshold is exceeded, the charging currents are adjusted based on the number of connected mobile devices and the current state of the battery; and if the second threshold is exceeded, the output current is maximized to ensure the fastest charging mode for the connected mobile device.

Preferably, the charging voltage is below 11.2 V if the first threshold is not exceeded, between 11.2-12 V if the first threshold is exceeded, and above 12V if the second threshold is exceeded.

Preferably, the charging currents and voltages at the charging outputs are continuously adjusted based on the measured data to maximize the operating time or functionality of the mobile devices.

Preferably, the instructions, including specific thresholds for the battery charge and the current generated by the means for generating energy, and the charging currents assigned to these thresholds, can be remotely modified by updating the instructions in a cloud module, which are then redirected to the executive modules of the mobile device charging system.

### BRIEF DESCRIPTION OF THE DRAWINGS

The present invention is illustrated by way of example in the accompanying drawings, wherein:
Fig. 1 depicts a general schematic of the system according to the invention;
Fig. 2 illustrates a detailed schematic of the system according to the invention;
Fig. 3 illustrates the functions of the individual modules;
Fig. 4 presents a general schematic of the method according to the invention;

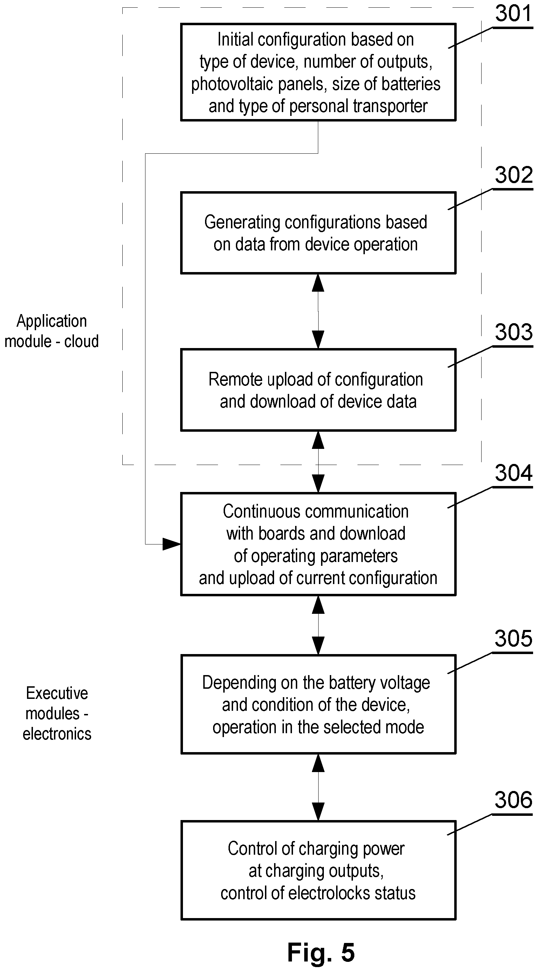

Fig. 5 demonstrates the architecture of the cloud module and executive modules.

### DETAILED DESCRIPTION

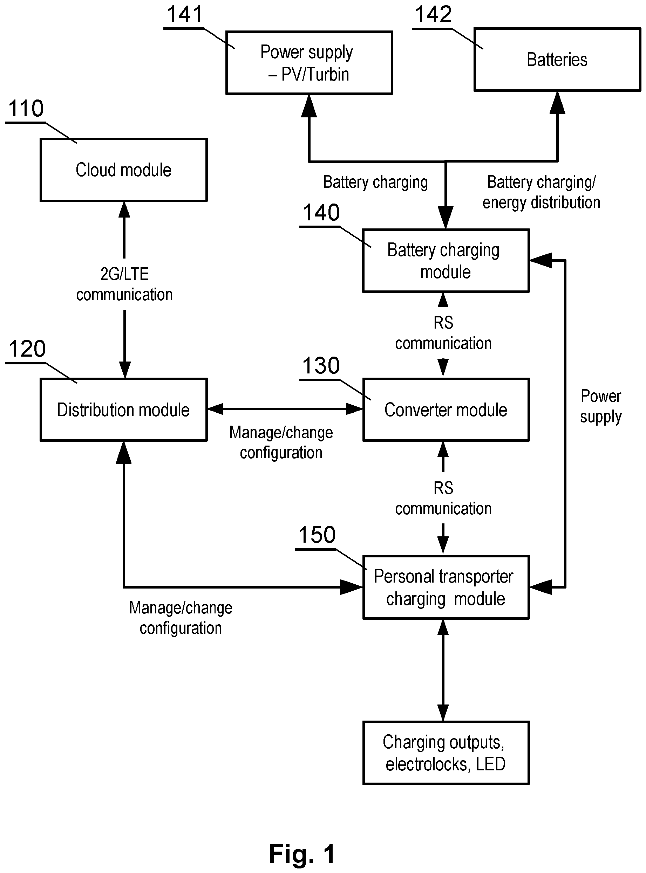

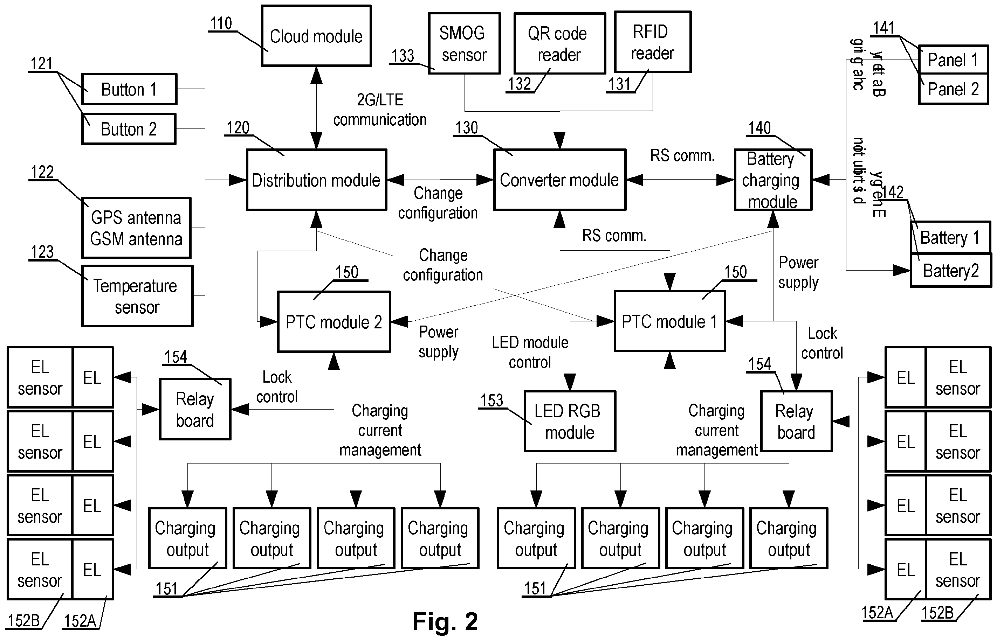

Figures 1 and 2 illustrate exemplary diagrams of a system designed for charging mobile devices, independent of mains power. The system encompasses a cloud module 110, a distribution module 120, a converter module 130, a battery charging module 140, and a personal transporter charging module 150. The system facilitates efficient charging of mobile devices utilizing energy derived from renewable sources (for instance, solar and wind power), without necessitating a connection to the power grid. This feature renders the system, as per the invention, free from the constraints of grid connectivity.

The cloud module 110 enables remote administration of the system. It is wirelessly linked to the distribution module 120 via telecommunication methods such as 2G or LTE communications. The cloud module 110 facilitates the implementation of instructions that govern the system's operation, particularly instructions that establish charging protocols for mobile devices. At a minimum, these instructions include specific thresholds for battery charge 142 and current generated by means for generating energy 141 from renewable sources. The charging currents corresponding to these thresholds determine the charging voltage at each charging output 151. Furthermore, these instructions may also encompass rules for charging currents based on the state of charge of the mobile device, its battery capacity, and the overall occupancy of the charging outputs 151. These instructions can be modified in the cloud module 110 and transmitted to subsequent system modules to align system operation with the system manager's expectations. The processes involved in determining system operation instructions can be executed by a human operator or automatically, for instance, using artificial intelligence systems. The cloud module 110 also enables remote monitoring of the system status and alerts the manager about potential faults and system load, which may provide crucial input for determining further instructions for system operation. The cloud module 110 can also be utilized to upload software updates for individual system modules and store a user database, which can be used for user verification and authorization. The cloud module 110 can be implemented as a private cloud specifically tailored for the aforementioned functions or as a separate public cloud instance adapted for this purpose.

The distribution module 120 is designed to communicate with the cloud module 110 and to regulate the operation of subsequent modules by supplying them with instructions and configuration files received from the cloud module 110. The communication between the distribution module 120 and the cloud module is implemented wirelessly, for instance, using the GSM antenna 122. The primary role of this module is to facilitate the flow of information between the modules. Additionally, the distribution module 120 can be used to gather supplementary information that may be pertinent to system management. Such data may include system location data obtained using the GPS antenna 122 or data on temperature and environmental conditions acquired using appropriate sensors 123. The distribution module 120 is connected to the converter module 130 and the personal transporter charging module 150 via two-way communication.

The converter module (130) is configured to receive an authorization code from the user, facilitating data transfer between modules. This authorization code can be presented in various forms and can be received via a QR code reader (132), an RFID reader (131), or a button integrated within the converter module (130). The converter module (130) is connected through bidirectional communication/RS to the distribution module (120), battery charging module (140), and personal transporter charging module (150).

The battery charging module (140) is designed to harness energy from renewable sources and charge batteries (142) accordingly. The battery charging module (140) includes a means for generating energy (141) from renewable sources and batteries (142) for storing the electricity produced by this means (141). The electricity obtained from this module is subsequently used to charge mobile devices. The means for generating energy (141) may be composed of photovoltaic panels or wind turbines.

The personal transporter charging module (150) is designed to accept and charge a mobile device. This module (150) comprises at least one charging output (151) designed for charging a mobile device, at least one electrolock (152A) designed for accepting and securing a mobile device, and an LED display (153) for determining the status of the charging output (151). The charging outputs (151) may be equipped with cables for connecting the mobile device, or may be designed as an outlet where the charging cable can be plugged in. Alternatively, the charging outputs (151) may facilitate inductive charging of mobile devices. The electrolock (152A) preferably includes a Sensor (152B) that indicates whether the mobile device is placed in the electrolock (152A). The LED display (153) may consist of LEDs, the number or color of which indicates the status of the charging output (151).

The personal transporter charging module (150) monitors the charge level of the battery (142), the amount of energy harnessed by the means for generating energy (141) from renewable sources, and the charging status of the mobile devices. It determines the charging voltage at each charging output (151) based on predefined instructions received from the cloud module (110). These instructions include predetermined thresholds for the charge of the battery (142) and the current generated by the means for generating energy (141) from renewable sources, and the charging currents at each charging output (151) assigned to these thresholds. The instructions determining the charging voltage can be remotely modified by altering the instructions in the cloud module (110) and transmitting them to the personal transporter charging module (150) via the distribution module (120).

Preferably, the instructions include specific thresholds for the battery charge (142) and current generated by the means for generating energy (141) from renewable sources, and charging currents assigned to these thresholds. This allows for two charging thresholds to be set for each charging output (151). Below the first threshold, the charging voltage is disabled, but the supply voltage enables the electrolocks (152A) to maintain operation. Above the first threshold, the charging voltage is adjusted according to the number of connected devices and set dynamically, depending on the current state of the battery. Above the second threshold, the charging voltage is set to the maximum, providing the fastest charging mode for the connected device. The thresholds consider both the state of charge of the battery and the current state of renewable energy generation.

Preferably, the charging voltage at the charging outputs (151) is as follows: below 11.2 V when the measured values do not exceed the first threshold; between 11.2- 12 V when the measured values exceed the first threshold; above 12 V when the measured values exceed the second threshold.

Preferably, the battery charging module (140) is designed to dynamically measure in real time the state of charge of the battery (142) and the current generated by the means for generating energy (141) from renewable sources.

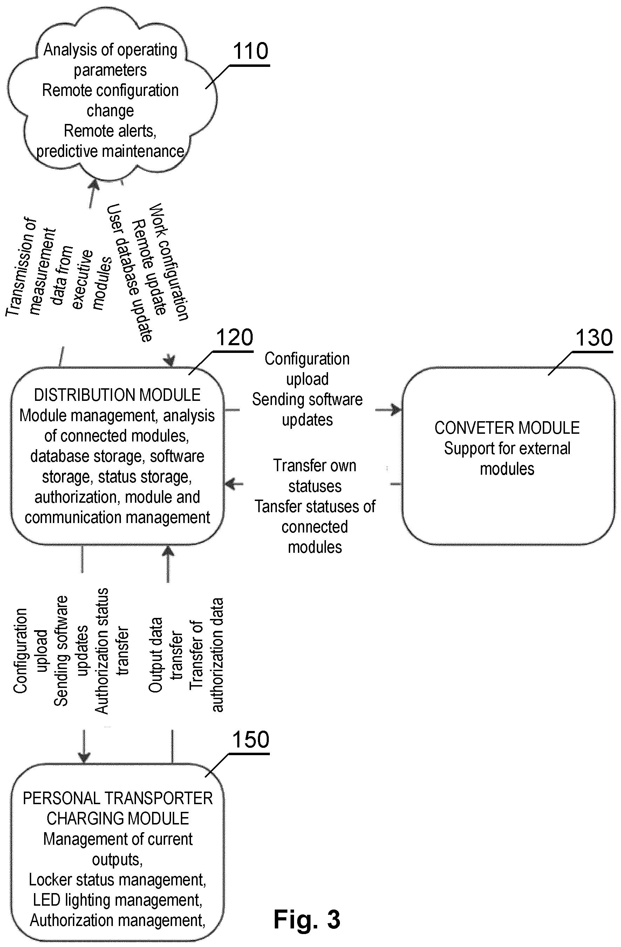

Fig. 3 shows the function of each module and the data that is transmitted between them.

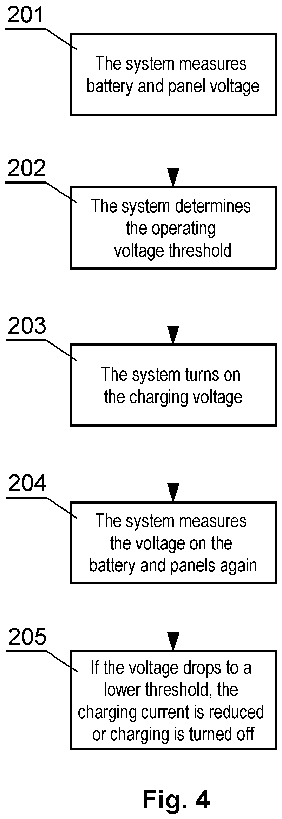

In another aspect, the invention relates to a method for managing the charging of mobile devices. Schematically, the steps of the method are shown in Fig. 4. The method includes the following steps:
Measuring (201) the state of charge of the battery (142) and the current generated by the means for generating energy (141) from renewable sources;
Determining (202) the charging current to be delivered to the selected charging output (151), based on the data on the state of charge of the battery (142) and the current generated by the means for generating energy (141) from renewable sources. This determination is made in accordance with predefined instructions stored in memory, which include specific thresholds for the battery charge (142), the current generated by the means for generating energy (141) from renewable sources, and the charging currents assigned to these thresholds;
Delivering (203) the determined charging current to the selected charging output (151); Repeating the measurement (204) of the state of charge of the battery (142) and the current generated by the means for generating energy (141) from renewable sources;
Monitoring (205) whether the state of charge of the battery (142) and the current generated by the means for generating energy (141) from renewable sources have changed to exceed a predetermined threshold in the instructions. If the threshold is exceeded, the charging current supplied to the charging output (151) is adjusted in accordance with the instructions.

The measurement (201) of the state of charge of the battery (142) and the current generated by the means for generating energy (141) from renewable sources can be performed using measuring means included in the battery charging module (140) of the invention. The determination (202) of the charging current to be supplied to the charging output (151) is executed by the personal transporter charging module (150), which stores the aforementioned instructions. The delivery (203) of energy to the charging outputs (151) is achieved using appropriate wiring, as is well-known in the art.

The instructions preferably include at least two thresholds. If the values do not exceed the first threshold, the charging currents are turned off, but the supply voltage is maintained to operate the electrolocks (152A). When the first threshold is exceeded, the charging currents are adjusted according to the number of connected mobile devices and are set dynamically, depending on the current state of the battery. When the second threshold is exceeded, the output current is set to the maximum, providing the fastest charging mode for the connected mobile device.

The charging voltage is preferably below 11.2 V if the first threshold is not exceeded, between 11.2-12 V after the first threshold is exceeded, and above 12V after the second threshold is exceeded.

The charging currents and voltages at the charging outputs (151) are preferably adjusted continuously based on the measurement data to maximize the operating time or the functionality of the mobile devices.

The instructions, which include specific thresholds for the battery charge (142) and the current generated by the means for generating energy (141) from renewable sources, and the charging currents assigned to these thresholds, can be remotely modified by changing the instructions in the cloud module, which are then routed to the actuators of the systems for charging mobile devices.

## Claims

1. A grid-independent mobile device charging system, comprising:
a cloud module (110) designed to analyze system data and determine the operational parameters of individual system modules based on this analysis;
a distribution module (120) wirelessly connected to the cloud module (110), designed to receive the operational parameters of individual system modules from the cloud module (110) and transmit them to subsequent modules;
a converter module (130) connected to the distribution module (120), designed to receive an authorization code from the user and facilitate information transfer between modules;
a battery charging module (140) connected to the converter module (130), designed to charge batteries (142), wherein the battery charging module (140) includes a means for generating energy (141) from renewable sources and batteries (142) for storing the electricity produced by said means for generating energy (141);
a personal transporter charging module (150) connected to the distribution module (120), the converter module (130), and the battery charging module (140), designed to receive and charge the mobile device, wherein the personal transporter charging module (150) comprises at least one charging output (151) designed to charge the mobile device, at least one electrolock (152A) designed to receive and secure the mobile device, and an LED display (153) for determining the status of the charging output (151);
**characterized in that**
the personal transporter charging module (150) monitors the battery charge level (142), the amount of energy produced by the means for generating energy (141) from renewable sources, and the charging status of the mobile device, and determines the charging voltage at each of the charging outputs (151) based on predefined instructions stored in memory containing specific thresholds for the battery charge (142) and the current generated by the means for generating energy (141) from renewable sources and the charging currents assigned to these thresholds, wherein the instructions that determine the charging voltage can be remotely modified by changing the instructions in the cloud module (110) and sending them to the personal transporter charging module (150) via the distribution module (120).

2. The grid-independent mobile device charging system according to claim 1, **characterized in that** the distribution module (120) includes a GSM antenna (122) that enables remote connection of the distribution module (120) with the cloud module (110).

3. The grid-independent mobile device charging system according to claim 1 or 2, **characterized in that** the distribution module (120) includes a temperature sensor (123).

4. The grid-independent mobile device charging system according to claims 1, 2, or 3, **characterized in that** the converter module (130) includes a QR code reader (132).

5. The grid-independent mobile device charging system according to any of the preceding claims, **characterized in that** the converter module (130) includes an RFID reader (131).

6. The grid-independent mobile device charging system according to any of the preceding claims, **characterized in that** the means for generating energy (141) from renewable sources is selected from the group consisting of photovoltaic panels and wind turbines.

7. The grid-independent mobile device charging system according to any of the preceding claims, **characterized in that** the electrolock (152A) further includes a sensor (152B) that indicates whether the mobile device is placed in the electrolock (152A).

8. The grid-independent mobile device charging system according to any of the preceding claims, **characterized in that** the instructions containing specific thresholds for charging the battery (142) and the current generated by the means for generating energy (141) from renewable sources, and charging currents assigned to these thresholds, allow the determination of two charging thresholds for each of the charging outputs (151), wherein:
below the first threshold, the charging voltage is turned off, but the supply voltage allows the electrolocks (152A) to continue operation;
above the first threshold, the charging voltage is adjusted to the number of connected devices and set dynamically, depending on the current state of the battery;
above the second threshold, the charging voltage is set to the maximum, providing the fastest charging mode for the connected device.

9. The grid-independent mobile device charging system according to claim 8, **characterized in that** the charging voltage at the charging outputs (151) is respectively:
below 11.2 V when the measured values do not exceed the first threshold;
between 11.2-12 V when the measured values exceed the first threshold;
above 12 V when the measured values exceed the second threshold.

10. The grid-independent mobile device charging system according to any of the preceding claims, **characterized in that** the battery charging module (140) is designed to dynamically measure in real time the state of charge of the battery (142) and the current generated by the means for generating energy (141) from renewable sources.

11. A method for managing the charging of mobile devices, the method comprising the steps of:
measuring (201) a state of charge of a battery (142) and a current generated by an means for generating energy (141) utilizing renewable sources;
determining (202) a charging current to be delivered to a selected charging output (151), based on the measured state of charge of the battery (142), the measured current generated by the means for generating energy (141), and predefined instructions stored in memory, said instructions comprising specific thresholds for the battery charge (142) and the current generated by the means for generating energy (141), and charging currents assigned to these thresholds;
delivering (203) the determined charging current to the selected charging output (151);
repeating (204) the measuring of the state of means for generating energy production means (141);
monitoring (205) for changes in the state of charge of the battery (142) and the current generated by the means for generating energy (141) that exceed a predetermined threshold in the instructions; and
modifying the charging current supplied to the charging output (151) in accordance with the instructions if the threshold is exceeded.

12. The method of claim 11, wherein the instructions include at least two thresholds, such that if the measured values do not exceed the first threshold, the charging currents are deactivated while maintaining supply voltage to operate electrolocks; if the first threshold is exceeded, the charging currents are adjusted based on the number of connected mobile devices and the current state of the battery; and if the second threshold is exceeded, the output current is maximized to ensure the fastest charging mode for the connected mobile device.

13. The method of claim 12, wherein the charging voltage is below 11.2 V if the first threshold is not exceeded, between 11.2-12 V if the first threshold is exceeded, and above 12V if the second threshold is exceeded.

14. The method of any one of claims 11 to 13, wherein the charging currents and voltages at the charging outputs (151) are continuously adjusted based on the measured data to maximize the operating time or functionality of the mobile devices.

15. The method of any one of claims 11 to 14, wherein the instructions, including specific thresholds for the battery charge (142) and the current generated by the means for generating energy (141), and the charging currents assigned to these thresholds, can be remotely modified by updating the instructions in a cloud module, which are then redirected to the executive modules of the mobile device charging system.
